# FASCICULE DE BREVET EUROPEEN

(11) **EP 0 480 818 B1**
(45) Date de publication et mention de la délivrance du brevet: **01.06.1994**
(21) Numéro de dépôt: 91402681.0
(22) Date de dépôt: 08.10.1991
(51) Int. Cl.: F16L 37/14

(54) **Dispositif perfectionné de jonction entre un raccord tubulaire souple et un embout tubulaire rigide**
Verbesserte Vorrichtung zum Verbinden eines Schlauchendes mit dem Ende eines starren Rohres
Improved connection device between a hose coupling and a rigid pipe end

(30) Priorité: 11.10.1990 FR 9012569
(43) Date de publication de la demande: 15.04.1992
(73) Titulaire: AUTOMOBILES PEUGEOT, 75116 Paris (FR); AUTOMOBILES CITROEN, 92200 Neuilly-sur-Seine (FR)
(72) Inventeur: Liochon, Michel, F-78570 Andresy (FR); Pettier, Jean-Michel, F-90000 Belfort (FR); Massoutier, Pascal, F-78780 Maurecourt (FR)
(74) Mandataire: Pinchon, Odile

(56) Documents cités:
- DE-A- 3 815 168
- US-A- 2 487 470
- US-A- 3 314 696
- US-A- 3 534 988

## Description

La présente invention concerne un dispositif perfectionné de jonction entre un raccord tubulaire souple et un embout tubulaire rigide utilisable notamment dans l'industrie automobile.

Les véhicules automobiles modernes comportent un capot de plus en plus effilé en vue de l'amélioration du coefficient de pénétration du véhicule dans l'air.

La place disponible sous le capot, pour le radiateur, est donc réduite par rapport aux véhicules plus anciens.

L'eau du circuit de refroidissement est donc relativement moins refroidie sur les véhicules modernes et cette eau se trouve pendant la marche du véhicule, à une pression et à une température sensiblement supérieures à la pression et à la température de l'eau dans les circuits de refroidissement des véhicules plus anciens.

Cette augmentation de pression entraîne des risques de fuite, au niveau des jonctions entre les conduits de raccordement souples et les embouts de raccordement rigides, par exemple du radiateur au moteur.

Dans l'état de la technique, les conduits de raccordement ou raccords souples sont engagés sur l'embout rigide correspondant et fixés de manière étanche sur cet embout grâce à un collier de serrage disposé autour du raccord souple.

Les colliers de serrage utilisés peuvent être de différents types.

On utilise par exemple des colliers élastiques, mais ces colliers n'assurent pas une très bonne étanchéité lorsque la pression dans le circuit de refroidissement est sensiblement supérieure à la pression atmosphèrique.

De plus, ces colliers élastiques nécessitent l'utilisation d'outils spécifiques pour leur montage et leur démontage.

On peut également utiliser des colliers de serrage à crémaillère mais ces colliers requièrent également l'utilisation d'un outillage spécifique pour leur montage et leur démontage.

De plus, le démontage de tels colliers est une opération très difficile.

Il est également possible d'utiliser des colliers à vis à direction tangentielle, mais ces colliers sont très difficiles à placer correctement sur le raccord et l'embout. De plus, le bon serrage de ces colliers ne peut pas être contrôlé visuellement.

En conséquence, les dispositifs de jonction des circuits de refroidissement dans lesquels les raccords souples sont enfilés sur les embouts rigides du circuit et serrés par des colliers, ne donnent donc pas satisfaction dans les conditions actuelles et à fortiori dans le cas de circuits de refroidissement fonctionnant sous haute pression. De plus, ces dispositifs ne peuvent pas être montés de façon automatique.

On a également décrit dans la demande de brevet français FR-A- 2 628 819 au nom des Demanderesses, un dispositif de jonction entre un raccord tubulaire souple et un embout tubulaire rigide, notamment pour un circuit de refroidissement d'un véhicule automobile, dans lequel le raccord souple est fixé de manière étanche à l'embout rigide par des organes de maintien et d'étanchéité, ce dispositf de jonction comportant deux éléments tubulaires rigides disposés de manière coaxiale par rapport à l'extrémité du raccord souple, à l'intérieur et à l'extérieur de ce raccord, respectivement, de manière que le raccord soit maintenu par serrage entre les deux éléments tubulaires, la fixation et l'étanchéité du raccord souple par rapport à l'embout rigide étant assurées par coopération de l'un au moins des éléments tubulaires avec les moyens de maintien et d'étanchéité.

Dans l'un des modes de réalisation décrits dans cette demande de brevet, les moyens de maintien sont constitués par un cavalier ou bague élastique comportant des branches pouvant s'écarter élastiquement, introduites dans des fentes traversant au moins partiellement la paroi de l'embout tubulaire et dans une gorge usinée dans l'un des éléments tubulaires rigides, mis en coincidence.

On connaît également les documents US-A-3314696 et 3534988.

Le document US-A-3314696 décrit un dispositif de jonction entre un raccord tubulaire souple et un embout tubulaire rigide, le raccord souple étant fixé de manière étanche à l'embout rigide par des organes de maintien et d'étanchéité, comportant des éléments tubulaires rigides disposés de manière coaxiale par rapport à l'extrémité du raccord souple, à l'extérieur et à l'intérieur de ce raccord respectivement, de manière que le raccord soit maintenu par serrage entre les deux éléments tubulaires, la fixation et l'étanchéité du raccord souple par rapport à l'embout rigide étant assurées par coopération des éléments tubulaires avec les moyens de maintien et d'étanchéité et les moyens de maintien étant constitués par un cavalier ou bague élastique comportant des branches pouvant s'écarter élastiquement, introduites dans des fentes traversant au moins partiellement la paroi de l'embout tubulaire.

Le document US-A-3534988 décrit un dispositif analogue.

Toutefois, les dispositifs décrits ci-dessus ne permettent pas un positionnement axial correct de l'élément tubulaire extérieur et donc du raccord souple par rapport à l'embout rigide.

Le but de l'invention est de proposer un dispositif de jonction du type décrit ci-dessus mais permettant un positionnement axial correct de l'élément extérieur et donc du raccord souple par rapport à l'embout rigide.

A cet effet, l'invention a pour objet un dispositif de jonction entre un raccord tubulaire souple et un embout tubulaire rigide, notamment pour un circuit de refroidissement d'un véhicule automobile, le raccord souple étant fixé de manière étanche à l'embout rigide par des organes de maintien et d'étanchéité, comportant deux éléments tubulaires rigides disposés de manière coaxiale par rapport à l'extrémité du raccord souple, à l'extérieur et l'intérieur de ce raccord, respectivement, de manière que le raccord soit maintenu par serrage entre les deux éléments tubulaires, la fixation et l'étanchéité du raccord souple par rapport à l'élément rigide étant assurées par coopération des éléments tubulaires avec les moyens de maintien et d'étanchéité et en ce que les moyens de maintien sont constitués par un cavalier ou bague élastique comportant des branches pouvant s'écarter élastiquement, introduites dans des fentes traversant au moins partiellement la paroi de l'embout tubulaire, caractérisé par le fait que les branches du cavalier engagent, en position assemblée de la jonction, des crans en saillie disposés sur l'élément tubulaire extérieur et que des rainures sont ménagées dans l'embout, les crans s'engageant élastiquement dans les rainures en position assemblée de la jonction.

Avantageusement, les crans comprennent une surface avant inclinée d'écartement des branches du cavalier lors de l'introduction de l'extrémité correspondante du raccord dans l'embout et une face arrière de blocage de ces branches en position pour empêcher tout retrait de cette extrémité du raccord de l'embout.

L'invention sera mieux comprise à l'aide de la description qui va suivre, donnée uniquement à titre d'exemple et faite en se référant aux dessins annexés, sur lesquels :
- la Fig.1 représente une vue en perspective éclatée d'un dispositif de jonction selon l'invention;
- la Fig.2 représente une vue en coupe d'un dispositif de jonction selon l'invention ;
- la Fig.3 représente une vue en perspective partiellement en coupe d'un dispositif de jonction selon l'invention ; et
- la Fig.4 représente une vue partielle à échelle agrandie de l'élément tubulaire extérieur de la Fig. 2.

Sur ces figures, on voit un raccord souple 1 constitué par l'extrémité de jonction d'une conduite en caoutchouc d'un circuit de refroidissement de véhicule automobile.

L'extrémité de ce raccord souple 1 est enfilée dans une première pièce ou élément de forme tubulaire rigide 2 présentant à chacune de ses extrémités, une portion repliée l'une, 2a, vers l'extérieur de cet élément tubulaire et l'autre, 2b, vers l'intérieur de celui-ci. Le raccord souple est enfilé dans cette pièce tubulaire jusqu'à ce que son extrémité vienne en appui contre la partie en saillie vers l'intérieur 2b de cette pièce.

Cet ensemble est ensuite introduit sur une extrémité cylindrique d'une seconde pièce ou élément tubulaire rigide 3, coaxial au premier, jusqu'à ce que la partie en saillie vers l'intérieur 2b de la pièce tubulaire extérieure 2 vienne en appui contre un épaulement 3a de cette seconde pièce tubulaire intérieure 3.

Cet épaulement 3a est ménagé dans la partie centrale de cet élément, tandis qu'à son autre extrémité cet élément tubulaire 3 comporte une gorge 3b de réception d'un joint d'étanchéité par exemple torique, 4, dont la fonction sera décrite plus en détail par la suite.

Une fois l'enfilement du raccord 1, et plus particulièrement de son extrémité entre ces deux éléments tubulaires 2 et 3, terminé, le serrage du raccord 1 entre les deux éléments tubulaires intérieur 3 et extérieur 2 est obtenu par déformation radiale d'une portion au moins de l'élément tubulaire intérieur 3 par exemple au niveau de la zone 5 de celui-ci.

Cette déformation peut être obtenue de toute manière connue en soi, par exemple par mandrinage.

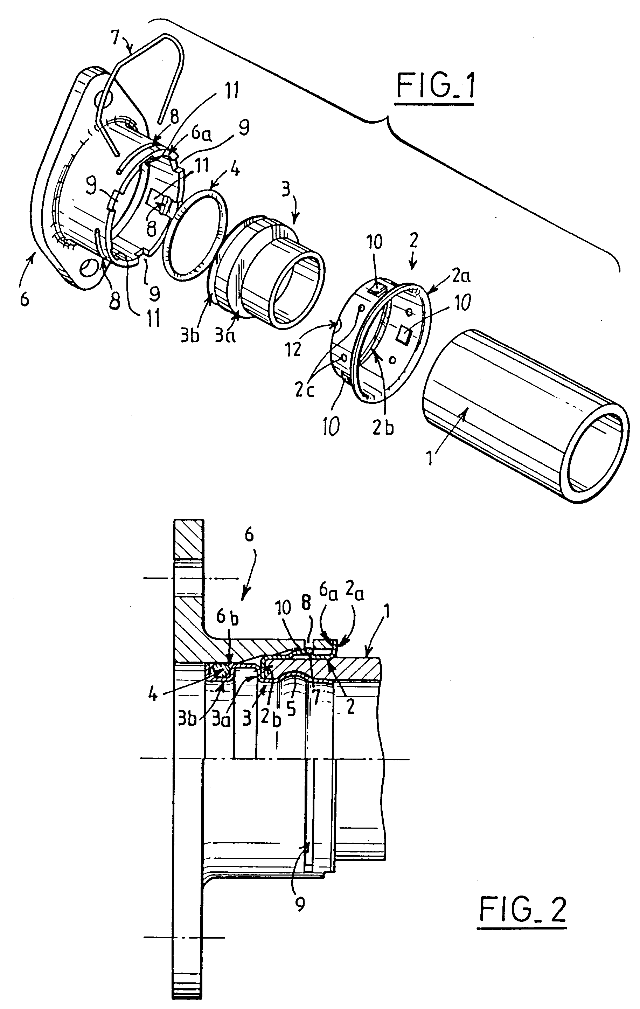

On notera que l'élément tubulaire extérieur 2 comporte en regard de cette zone déformée, des trous 2c (Fig.1) permettant le fluage du matériau constituant ce raccord lors de cette opération de mandrinage.

Ceci permet d'assurer une bonne liaison entre les différents éléments.

Une fois cette opération terminée, le joint d'étanchéité 4 est placé dans la gorge 3b puis cet ensemble est introduit dans un embout tubulaire rigide 6 qui peut être constitué par exemple par un embout de raccordement d'un moteur de véhicule automobile. Cet embout est préalablement muni d'un cavalier 7 dont la fonction sera décrite plus en détail par la suite. L'ensemble constitué du raccord 1 et des éléments tubulaires extérieur et intérieur 2 et 3, est enfilé dans cet embout jusqu'à ce que la partie en saillie vers l'extérieur 2a de l'élément tubulaire extérieur 2 vienne en appui contre une surface de butée 6a, prévue à l'extrémité correspondante de cet embout pour assurer un positionnement correct de l'ensemble décrit précédemment dans l'embout.

Dans cette position, le joint d'étanchéité 4 est en regard d'une surface d'étanchéité 6b de cet embout.

Des moyens de maintien de cet ensemble dans l'embout tubulaire 6 sont constitués par le cavalier ou bague élastique 7 comportant des branches pouvant s'écarter élastiquement, introduites dans des fentes 8, traversant la paroi de l'embout tubulaire 6 dans leur partie centrale mais constituant de simples cannelures dans lesquelles se logent les branches du cavalier 7 dans leurs parties latérales. Ces branches coopèrent, au niveau de la partie centrale des fentes 8, avec des crans par exemple 10.

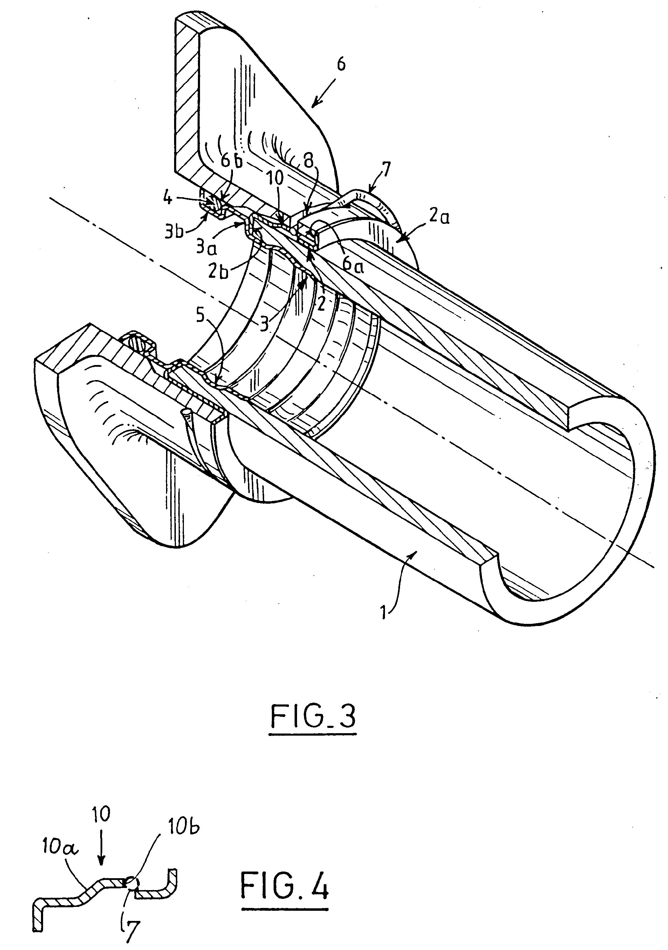

Selon l'invention, ces crans 10 sont ménagés en saillie sur l'élément tubulaire extérieur 2. Ces crans 10 comprennent avantageusement une face avant inclinée 10a (Fig.4) d'écartement des branches du cavalier 7 lors de l'introduction de l'ensemble raccord 1 - Eléments tubulaires 2 et 3 dans l'embout 6 et une face arrière 10b de blocage de ces branches en position pour empêcher tout retrait dudit ensemble de l'embout.

Ainsi, lors de l'introduction de l'ensemble décrit précédemment dans l'embout 6, les faces avant des crans 10 écartent les branches déformables élastiquement du cavalier 7 qui, lorsque ces crans sont passés, reviennent dans leur position initiale en appui contre les faces arrière de ces crans pour empêcher tout retrait de cet ensemble.

On notera également que ces crans 10 sont engagés dans des rainures 11 (Fig.1) de l'embout tubulaire 6 pour assurer un positionnement correct de l'élément tubulaire extérieur 2 et donc du raccord 1 par rapport à l'embout 6. D'autres parties en saillie de cet élément tubulaire extérieur 2 ou de l'élément tubulaire intérieur 3, peuvent être utilisées pour remplir cette fonction.

Enfin, on notera que l'élément tubulaire extérieur 2 peut comporter également à son extrémité proche de la partie en saillie vers l'intérieur 2b, des lumières 12 permettant de contrôler visuellement la position du raccord 1 dans cet élément 2 et de s'assurer que ce raccord 1 est correctement introduit dans cet élément 2.

Il va de soi bien entendu que des marques, par exemple de couleur, peuvent être réalisées sur les différents éléments mentionnés précédemment, pour permettre une indexation de position et un positionnement correct des différents éléments lors du montage.

Le montage de ce dispositif peut être automatisé. On peut alors aménager la partie 2a, par exemple en y usinant des méplats, pour recevoir des moyens de préhension de robot. On peut également prévoir une zone de contre-appui sur l'embout 6, et le démontage peut s'opérer très facilement en écartant les branches du cavalier élastique 7 par tout outil approprié.

Le démontage peut par exemple être nécessaire lorsque l'on désire intervenir sur le moteur ou sur le radiateur du véhicule et il suffit de retirer le cavalier 7 pour dégager l'ensemble raccord 1 - éléments tubulaires 2, 3 et joint torique 4 de l'embout 6.

Il est à noter que l'introduction d'un outil, tel qu'un tournevis, entre l'extrémité de l'embout 6, au niveau d'encoches 9 prévues à cet effet et la partie en saillie vers l'extérieur 2a de l'organe tubulaire extérieur 2 permet d'exercer une force de retrait importante lorsque l'on souhaite retirer le raccord. Ceci est nécessaire notamment en cas de collage anormal du joint d'étanchéité 4.

On constate donc que le dispositif selon l'invention est très simple et très rapide à monter et que la bague élastique 7 montée préalablement sur l'embout 6 se met en place automatiquement lors du montage du raccord 1 dans cet embout 6.

Le raccord 1 est par ailleurs maintenu de façon très simple et très sûre entre les deux éléments tubulaires intérieur et extérieur 3 et 2, sans collage et sans emmanchement à force dans la mesure où le blocage en position est réalisé après introduction de ces éléments 2, 3 autour du raccord 1.

Bien que l'on ait représenté un mode de réalisation dans lequel l'embout 6 constitue la sortie de l'eau d'un moteur, cet embout peut également être utilisé dans d'autres applications et présenter des formes différentes.

En effet, ce dispositif peut être utilisé dans n'importe quelle connexion du circuit de refroidissement d'un véhicule, ou pour tout raccordement d'une conduite à un élément du circuit de refroidissement.

Enfin, des applications dans des domaines autres que l'industrie automobile peuvent également être envisagées.

Ainsi qu'on l'a mentionné dans la demande de brevet mentionnée précédemment, le dispositif selon l'invention permet d'obtenir une simplification du montage en chaine et du démontage de ce type de dispositifs et un gain de temps notable.

L'invention peut s'appliquer à tout circuit de fluide sous pression, par exemple à un circuit d'air, notamment d'air de suralimentation, ou à un circuit de fluide utilisé dans un circuit de réfrigération.

## Revendications

1. Dispositif de jonction entre un raccord tubulaire souple et un embout tubulaire rigide, le raccord souple étant fixé de manière étanche à l'embout rigide par des organes de maintien et d'étanchéité, comportant des éléments tubulaires rigides (2,3) disposés de manière coaxiale par rapport à l'extrémité du raccord souple (1), à l'extérieur et à l'intérieur de ce raccord respectivement, de manière que le raccord (1) soit maintenu par serrage entre les deux éléments tubulaires (2,3), la fixation et l'étanchéité du raccord souple (1) par rapport à l'embout rigide (6) étant assurées par coopération des éléments tubulaires (2, 3) avec les moyens de maintien et d'étanchéité et en ce que les moyens de maintien sont constitués par un cavalier (7) ou bague élastique comportant des branches pouvant s'écarter élastiquement, introduites dans des fentes (8) traversant au moins partiellement la paroi de l'embout tubulaire (6), caractérisé par le fait que les branches du cavalier (7) engagent, en position assemblée de la jonction, des crans en saillie (10) disposés sur l'élément tubulaire extérieur (2) et que des rainures (11) sont ménagées dans l'embout (6), les crans (10) s'engageant élastiquement dans les rainures (11) en position assemblée de la jonction.

2. Dispositif selon la revendication 1, caractérisé en ce que lesdits crans (10) comportent une face avant inclinée (10a) d'écartement des branches du cavalier (7) lors de l'introduction de l'ensemble raccord (1) - éléments tubulaires (2, 3) dans l'embout (6) et une face arrière (10b) de blocage de ces branches en position pour empêcher tout retrait dudit ensemble de l'embout (6).

3. Dispositif selon l'une quelconque des revendications précédentes, caractérisé en ce que l'élément tubulaire extérieur (2) comporte à chacune de ses extrémités une partie radiale en saillie (2a,2b), l'une (2a) vers l'extérieur de cet élément, adaptée pour coopérer avec une surface de butée (6a) de l'embout (6) et l'autre (2b) vers l'intérieur de cet élément pour coopérer avec un épaulement (3a) de l'élément tubulaire intérieur (3) et le raccord (1) afin de positionner l'extrémité correspondante du raccord (1) dans l'embout (6).

4. Dispositif selon la revendication 3, caractérisé en ce que des lumières (12) sont ménagées à proximité de la partie en saillie vers l'intérieur (2b) de l'élément tubulaire extérieur (2), afin de permettre un contrôle visuel de la position du raccord (1) dans cet élément (2).

5. Dispositif selon l'une quelconque des revendications précédentes, caractérisé en ce que l'élément tubulaire intérieur (3) comporte une gorge (3b) de réception d'un joint d'étanchéité (4) en regard d'une surface d'étanchéité (6b) de l'embout (6).

6. Dispositif selon l'une quelconque des revendications précédentes, caractérisé en ce que le serrage du raccord (1) entre les deux éléments tubulaires (2,3) est obtenu par déformation radiale d'une portion (5) de l'élément tubulaire intérieur (3).

7. Dispositif selon la revendication 6, caractérisé en ce que des trous (2c) sont ménagés dans l'élément tubulaire extérieur (2) en regard de la portion déformée (5) de l'élément tubulaire intérieur pour le fluage du matériau constituant le raccord (1) lors de cette déformation.

8. Dispositif selon l'une quelconque des revendications précédentes, caractérisé en ce que des encoches (9) sont prévues à l'extrémité de l'embout (6) pour le passage d'un outil en vue du démontage du dispositif de jonction.

## Patentansprüche

1. Vorrichtung zur Verbindung eines Schlauchanschlußstücks mit einem starren Rohransatzstück, wobei das Schlauchanschlußstück dicht abschließend am starren Ansatzstück mittels Halte- und Dichtvorrichtungen befestigt ist, die starre, bezüglich des Endes des Schlauchanschlußstücks (1) koaxiale und jeweils innerhalb und außerhalb dieses Stücks angeordnete Rohrelemente (2,3) umfassen, so daß das Anschlußstück (1) zwischen den beiden Rohrelementen (2,3) eingespannt ist, wobei Befestigung und Dichtheit des Schlauchanschlußstücks (1) zum starren Ansatzstück (6) durch Zusammenwirken der Rohrelemente (2,3) mit den Halte- und Dichtvorrichtungen gewährleistet sind, und die Haltevorrichtungen aus einer Klammer (7) oder einem Spannring mit elastisch abspreizbaren Armen bestehen, die in Schlitze (8) eingeführt werden, die zumindest teilweise durch die Wand des Rohransatzstücks (6) führen, dadurch gekennzeichnet, daß die Arme der Klammer (7) in zusammengefügter Stellung der Verbindung um auf dem äußeren Rohrelement (2) vorgesehene Rastkerben (10) fassen, und daß im Rohransatzstück (6) Rillen (11) vorgesehen sind und die Rastkerben (10) in zusammengefügter Stellung der Verbindung in elastischer Weise in die Rillen (11) führen.

2. Vorrichtung nach Anspruch 1, dadurch gekennzeichnet, daß die Rastkerben (10) eine abgeschrägte Vorderseite (10a) zum Wegspreizen der Arme der Klammer (7) beim Einführen der Verbindung aus Schlauchanschlußstück (1) und Rohrelementen (2,3) in das Rohransatzstück (6) und eine Hinterseite (10b) zur Arretierung dieser Arme in ihrer Stellung aufweisen, um jegliches Herausrutschen dieser Verbindung aus dem Ansatzstück (6) zu verhindern.

3. Vorrichtung nach einem der vorstehenden Ansprüche, dadurch gekennzeichnet, daß das äußere Rohrelement (2) an jedem seiner Enden einen vorstehenden Bereich (2a,2b) aufweist, und zwar einen (2a) nach außerhalb dieses Elements vorstehenden Bereich, der so angepaßt ist, daß er mit einer Anschlagfläche (6a) des Ansatzstücks (6) zusammenwirkt, und einen nach innerhalb (2b) dieses Elements vorstehenden Bereich, der mit einem Vorsprung (3a) des inneren Rohrstücks (3) und dem Anschlußstück (1) zusammenwirkt, um das entsprechende Ende des Anschlußstücks (1) im Ansatzstück (6) zu positionieren.

4. Vorrichtung nach Anspruch 3, dadurch gekennzeichnet, daß Öffnungen (12) nahe des nach innen vorstehenden Bereichs (2b) des äußeren Rohrelements (2) vorgesehen sind, um eine visuelle Kontrolle der Position des Anschlußstücks (1) in diesem Element (2) zu ermöglichen.

5. Vorrichtung nach einem der vorstehenden Ansprüche, dadurch gekennzeichnet, daß das innere Rohrelement (3) eine Rille (3b) zur Aufnahme einer Dichtung (4) gegenüber einer Dichtfläche (6b) des Ansatzstücks (6) aufweist.

6. Vorrichtung nach einem der vorstehenden Ansprüche, dadurch gekennzeichnet, daß das Einspannen des Anschlußstücks (1) zwischen den beiden Rohrelementen (2,3) durch radiale Verformung eines Bereichs (5) des inneren Rohrelements (3) erfolgt.

7. Vorrichtung nach einem der vorstehenden Ansprüche, dadurch gekennzeichnet, daß im äußeren Rohrelement (2) gegenüber des verformten Bereichs (5) des inneren Rohrelements Löcher (2c) für das Kriechen des Materials, aus dem der Anschluß (1) besteht, während dieser Verformung vorgesehen sind.

8. Vorrichtung nach einem der vorstehenden Ansprüche, dadurch gekennzeichnet, daß am Ende des Ansatzstücks (6) Aussparungen (9) vorgesehen sind, die das Einführen eines Werkzeugs zur Demontage der Verbindungsvorrichtung erlauben.

## Claims

1. A joint device between a flexible tubular connector and a rigid tubular joining piece, the flexible connector being fastened in a watertight manner to the rigid joining piece by holding and sealing members, comprising rigid tubular elements (2, 3) arranged coaxially relative to the end of the flexible connector (1), outside and inside this connector respectively, such that the connector (1) is held by clamping between the two tubular elements (2, 3), the fastening and sealing of the flexible connector (1) relative to the rigid joining piece (6) being ensured by the cooperation of the tubular elements (2, 3) with the holding and sealing means and in that the holding means consist of a U-bracket (7) or resilient ring comprising branches which can be moved apart resiliently, inserted in slots (8) passing at least partly through the wall of the tubular joining piece (6), characterised by the fact that the branches of the U-bracket (7) engage, when the joint is in the assembled position, with projecting catches (10) arranged on the outer tubular element (2) and that channels (11) are contrived in the joining piece (6), the catches (10) engaging resiliently in the channels (11) when the joint is in the assembled position.

2. A device according to Claim 1, characterised in that said catches (10) comprise a slanted front face (10a) for moving apart the branches of the U-bracket (7) when the connector (1)/tubular elements (2, 3) assembly is inserted into the joining piece (6) and a rear face (10b) for locking these branches in position to prevent any withdrawal of said assembly from the joining piece (6).

3. A device according to any one of the preceding claims, characterised in that the outer tubular element (2) comprises at each of its ends a radial portion (2a, 2b), one (2a) projecting out of this element, suitable for cooperating with a stop surface (6a) of the joining piece (6) and the other (2b) projecting into this element in order to cooperate with a shoulder (3a) of the inner tubular element (3) and the connector (1) in order to position the corresponding end of the connector (1) in the joining piece (6).

4. A device according to Claim 3, characterised in that ports (12) are contrived near the inward-projecting portion (2b) of the outer tubular element (2), in order to allow visual checking of the position of the connector (1) in this element (2).

5. A device according to any one of the preceding claims, characterised in that the inner tubular element (3) comprises a groove (3b) for receiving a sealing ring (4) facing a sealing surface (6b) of the joining piece (6).

6. A device according to any one of the preceding claims, characterised in that the clamping of the connector (1) between the two tubular elements (2, 3) is obtained by radial deformation of a portion (5) of the inner tubular element (3).

7. A device according to Claim 6, characterised in that holes (2c) are contrived in the outer tubular element (2) facing the deformed portion (5) of the inner tubular element for the extrusion of the material constituting the connector (1) at the time of this deformation.

8. A device according to any one of the preceding claims, characterised in that recesses (9) are provided at the end of the joining piece (6) through which a tool can be passed with a view to disassembling the joint device.
